# EUROPÄISCHE PATENTSCHRIFT

(11) **EP 1 064 135 B1**
(45) Veröffentlichungstag und Bekanntmachung des Hinweises auf die Patenterteilung: **26.02.2003**
(21) Anmeldenummer: 99939836.5
(22) Anmeldetag: 17.03.1999
(51) Int. Cl.: B29C 33/12, B29C 70/78, B29C 45/14

(54) **VORRICHTUNG UND VERFAHREN ZUM HINTERPRESSEN UND/ODER HINTERSPRITZEN SOWIE ZUM EINFASSEN EINES DEKORMATERIALS MIT EINEM TRÄGERMATERIAL**
DEVICE AND METHOD FOR IN-MOLD COMPRESSION AND/OR IN-MOLD INJECTION AND FOR EDGING A DECORATIVE MATERIAL WITH A SUPPORTING MATERIAL
DISPOSITIF ET PROCEDE POUR POSER DANS LE MOULE UN MATERIAU DECORATIF, AINSI QUE POUR BORDER CE DERNIER D'UN MATERIAU DE SUPPORT

(30) Priorität: 19.03.1998 CH 66798
(43) Veröffentlichungstag der Anmeldung: 03.01.2001
(73) Patentinhaber: Kaufmann, Georg, 5442 Fislisbach (CH)
(72) Erfinder: Kaufmann, Georg, 5442 Fislisbach (CH)
(74) Vertreter: EGLI-EUROPEAN PATENT ATTORNEYS
(86) Internationale Anmeldenummer: CH9900117
(87) Internationale Veröffentlichungsnummer: WO99047328

(56) Entgegenhaltungen:
- EP-A- 0 680 712
- EP-A- 0 773 098
- DE-A- 4 038 172
- FR-A- 1 496 387
- GB-A- 2 103 534
- GB-A- 2 236 705
- NL-C- 67 355

## Beschreibung

Die Erfindung betrifft das Einfassen eines Dekormaterials, bzw. zumindest eines Teils des Randes desselben, durch Hinterpressen und/oder Hinterspritzen mit einem Trägermaterial. Zur Durchführung des Verfahrens dient eine Vorrichtung, welche mindestens zwei - eine Kavität ausbildende - Formteile umfasst. Gemäss einem ersten Aspekt betrifft die Erfindung eine Vorrichtung, entsprechend dem Oberbegriff des unabhängigen Anspruchs 1. Gemäss einem zweiten Aspekt betrifft die Erfindung ein Verfahren zum Hinterpressen bzw. zum Hinterspritzen, entsprechend dem Oberbegriff des unabhängigen Anspruchs 13 bzw. 15.

In vielen Gebieten der Technik werden Bauteile aus Kunststoff verwendet, die neben funktionalen Anforderungen auch ästhetische Ansprüche erfüllen müssen. Dazu ist als ein Beispiel von vielen der Automobilbau zu nennen, wo für Innenverkleidungen, Hutablagen, Kofferraumabdeckungen, Armaturenbrett u.ä. solche Kunststoffbauteile Verwendung finden. Um diese ästhetisch ansprechend zu gestalten, wird deshalb auf einer Sichtseite des Kunststoffbauteils oftmals als gesonderte Oberflächenschicht eine Dekorschicht angebracht. Aus Gründen einer unproblematischen Entsorgung bzw. einer vereinfachten Wiederverwendung sollte das Dekormaterial vorzugsweise aus dem gleichen Material wie das tragende Kunststoffbauteil hergestellt sein. Solche Monomaterialien lassen sich wesentlich kostengünstiger rezyklieren als Mischmaterialien, die zuerst getrennt werden müssen. Zur Herstellung derartiger Kunststoffbauteile wurde das sogenannte Hinterpressverfahren entwickelt. Dieses Verfahren ist in der Publikation "Kunststoffe im Automobilbau, VDI-Verlag GmbH, Düsseldorf 1994" beschrieben. Es sieht vor, dass an einem Werkzeugoberteil einer geöffneten Werkzeugform, deren Teile eine Kavität ausbilden, eine Dekorschicht so befestigt wird, dass es die Oberfläche des Werkzeugoberteils, bzw. die Oberfläche der Kavität, gegebenenfalls vollflächig bedeckt. Anschliessend wird in die weiterhin geöffnete Werkzeugform eine geschmolzene und daher fliessfähige Kunststoffmasse beispielsweise mittels des Quellflussverfahrens eingespritzt bzw. mittels des Strangablegeverfahrens eingelegt. Danach wird die Form geschlossen, wodurch sich unter dem Schliessdruck die Kunststoffmasse gleichmässig in der Kavität der Form verteilt und, zumindest bei Dekormaterialien mit Poren, wie beispielsweise bei textilen Materialien, teilweise in das Dekormaterial eindringt. Auch kann ein Dekormaterial an seiner Oberfläche mit dem Trägermaterial verschmelzen. Die Kunststoffmasse erstarrt im folgenden und geht dabei mit der Dekorschicht eine innige Verbindung ein. Dieses Hinterpressverfahren kann auch mit dem Hinterspritzverfahren kombiniert werden, bei dem das Trägermaterial in die bereits geschlossene Form, in welche zuvor das Dekormaterial eingelegt wurde, auf die Hinterseite des Dekormaterials eingespritzt wird.

Ein solches Hinterpress- und/oder Hinterspritzverfahren kann verwendet werden, um eine fur ein Dekormaterial geeignete Trägerschicht zu produzieren. Mit der einstückigen Herstellung dieser Trägerschicht, welche zudem den Rand des Dekormaterials einfasst, würden die Zuschneidetoleranzen im Dekormaterial ausgeglichen und die Produktion um den Arbeitsgang des Aufklebens beispielsweise eines Teppichs vereinfacht. Ein grosses Problem stellt dabei aber die Positionierung bzw. das sichere Halten des Randes des Dekormaterials in der Kavität einer Werkzeugform zum Hinterpressen bzw. Hinterspritzen dar. Durch das Verdrängpressen der eingefüllten Kunststoffmaterialschmeize kann der Rand des Dekormaterials in nicht vorhersagbarer Weise beispielsweise gestaucht oder angehoben werden, so kann dieser Rand an die Oberfläche der Einfassung ausweichen, weil er vom Trägermaterial verdrängt wird. Eine saubere Ausbildung einer Einfassung, welche zuverlässig und vollständig den Rand des Dekormaterials abdeckt, kann somit nicht gewährleistet werden.

Aus FR 1 496 387 und GB 2 103 534 sind Verfahren und Vorrichtungen zum Hinterspritzen eines Dekormaterials und zum Einfassen dessen Ränder bekannt. Das Dekormaterial wird jeweils - während einer ersten Einspritzphase - gegen ein Verschieben gehalten. Als Haltemittel dienen bewegliche, gefederte bzw. zurückziehbare Taster, welche durch den Druck des eingespritzten Kunststoffs bzw. durch äussere Einwirkung vom Dekormaterial wegbewegt werden. Während bei FR 1 496 387 das Dekormaterial an seinen Ecken gehalten wird, greifen die Haltemittel in GB 2 103 534 auf der Fläche des Dekormaterials an.

Die Aufgabe der Erfindung umfasst das Bereitstellen einer Vorrichtung sowie eines Verfahrens zum Hinterpressen und/oder Hinterspritzen von Dekormaterialien, wie Teppichen, Textilien oder Folien, und zum Einfassen zumindest eines Teils des Randes dieser Dekormaterialien mit einem als fliessfähige Masse vorliegenden Trägermaterial, mit der bzw. mit dem der Rand dieses Dekormaterials während dem Hinterpressen/Hinterspritzen und beim Ausführung der Randeinfassung zuverlässig gehalten werden kann, damit dieser Rand vollständig eingefasst wird.

Gelöst wird diese Aufgabe durch das Vorschlagen einer Vorrichtung, gemäss den Merkmalen des unabhängigen Anspruchs 1, sowie eines Verfahrens zum Hinterpressen, gemäss den Merkmalen des unabhängigen Anspruchs 13 bzw. zum Hinterspritzen, gemäss den Merkmalen des unabhängigen Anspruchs 15. Bevorzugte Weiterbildungen dieser erfindungsgemässen Vorrichtung bzw. der erfindungsgemässen Verfahren sind in den abhängigen Ansprüchen angegeben.

Vorteile der Erfindung gegenüber dem Stand der Technik umfassen die Möglichkeit, selbst Dekormaterialien, die eine komplizierte bzw. unregelmässige Raumform aufweisen, zuverlässig einzufassen.

Die vorgeschlagenen, fixen - d.h. gegenüber der Oberfläche der Kavität, an welcher diese Haltemittel angeordnet sind, unbeweglichen - Haltemittel stellen eine einfache Einrichtung dar. Diese ist gegenüber den gefederten bzw. zurückziehbaren Taster in den Vorrichtungen des Standes der Technik nicht nur kostengünstiger herstellbar, man kann von der vorgeschlagenen Lösung auch erwarten, dass sie weniger störanfällig als die Vorrichtungen im Stand der Technik ist.

Bei den folgenden Figuren handelt es sich um die schematische Darstellung von beispielhaften Ausführungsformen, welche einzelne Aspekte der erfindungsgemässen Vorrichtung bzw. des erfindungsgemässen Verfahrens zeigen. Beliebige Kombinationen dieser Aspekte führen zu weiteren Ausführungsformen, die ebenfalls vom Erfindungsgedanken erfasst sind. Diese Figuren begrenzen damit den Umfang der Erfindung in keiner Art und Weise. Es zeigen:
- Fig. 1: Eine schematische Schnittdarstellung zweier Ausführungsformen der Erfindung, zum Erläutern des prinzipiellen Unterschiedes zwischen Hinterspritzen und Hinterpressen;
1A geöffnete Form für das Hinterspritzen;
1B geschlossene Form für das Hinterspritzen bzw. Hinterpressen;
1C geöffnete Form für das Hinterpressen bzw. Hinterspritzen;
- Fig. 2: Eine geschlossene Vorrichtung, gemäss einer ersten Ausführungsform, vor dem Hinterspritzen mit einem Trägermaterial;
- Fig. 3: Eine teilweise geöffnete Vorrichtung, gemäss einer zweiten Ausführungsform, beim Einspritzen eines Trägermaterials mittels Quellflussverfahren und nachfolgendem Hinterpressen;
- Fig. 4: Eine geschlossene Vorrichtung, gemäss einer zweiten Ausführungsform, vor dem Hinterspritzen mit einem Trägermaterial;
- Fig. 5: Eine geschlossene Vorrichtung, gemäss einer dritten Ausführungsform, vor dem Hinterspritzen mit zwei Trägermaterialien;
- Fig. 6: Eine geschlossene Vorrichtung, gemäss einer vierten Ausführungsform, vor dem Hinterspritzen mit zwei Trägermaterialien;
- Fig. 7: Eine geschlossene Vorrichtung, gemäss einer fünften Ausführungsform, vor dem Hinterspritzen mit einem Trägermaterial mittels Gas-Innendruckverfahren;
- Fig. 8: Bauteil mit einem Dekormaterial, das mit einem Trägermaterial flächig verbunden und zumindest teilweise am Rand vollständig eingefasst ist;
8A bei welchem das Trägermaterial und die Randeinfassung aus dem gleichen Material bestehen;
8B bei welchem die Randeinfassung hohl ausgebildet ist und dessen Material anders eingebracht wurde als das übrige Trägermaterial;
8C bei welchem die Randeinfassung als Dichtlippe ausgebildet ist, einen Hinterstich aufweist und aus einem anderen Material als das Trägermaterial besteht;

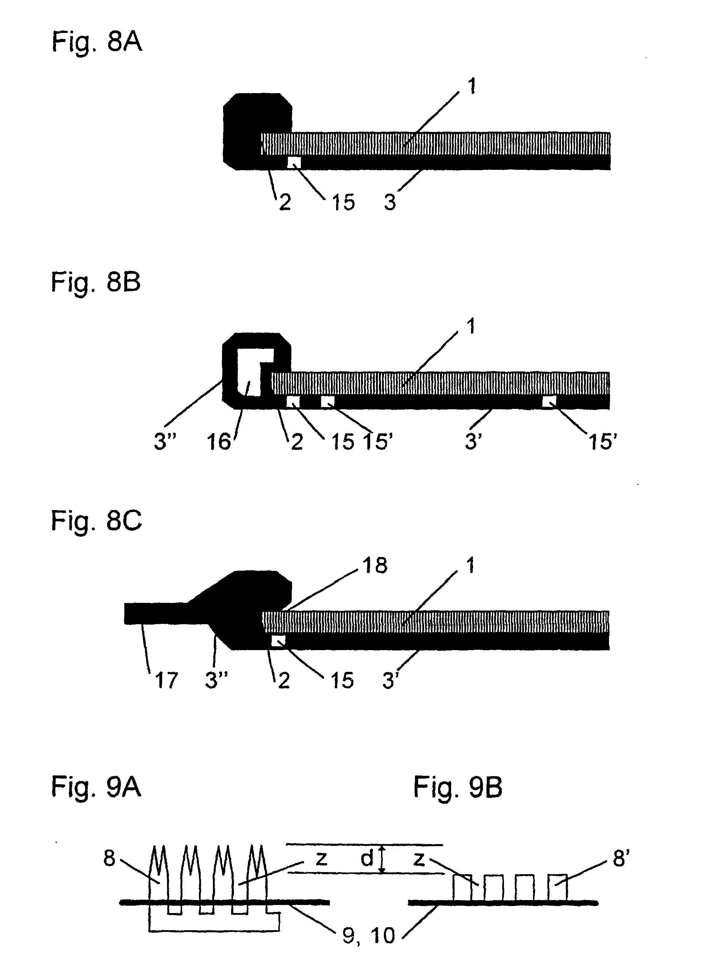

- Fig. 9: Kammartige Kombinationen von als Nadeln ausgebildete Haltemittel.

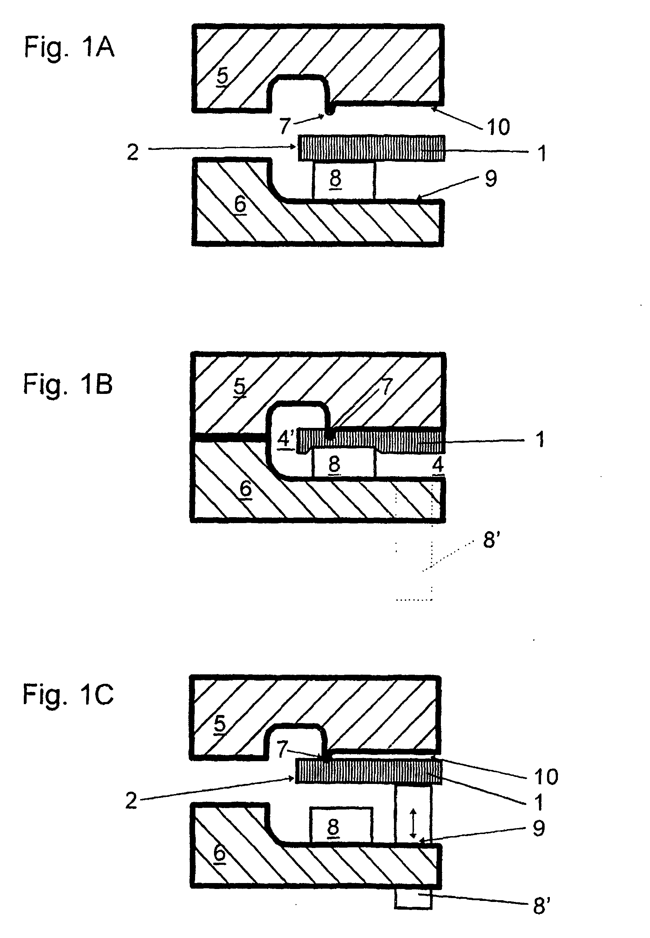

Figur 1 zeigt eine Vorrichtung zum Hinterspritzen bzw. zum Hinterpressen und/oder Hinterspritzen eines Dekormaterials 1 und zum Einfassen zumindest eines Teils des Randes 2 dieses Dekormaterials mit einem Trägermaterial 3. Eine solche Vorrichtung umfasst mindestens zwei - eine Kavität 4,4' ausbildende - Formteile 5,6. Ein erstes Formteil 5 umfasst Anpressmittel 7 und ein zweites Formteil 6 umfasst Haltemittel 8 zum Halten eines in die Kavität 4,4' gelegten Dekormaterials 1 in einem Abstand zu einer durch das zweite Formteil 6 gebildeten Oberfläche 9 der Kavität. Diese Haltemittel 8 sind gegenüber dieser Oberfläche 9 erhaben und ganz innerhalb der Kavität 4,4' und gegenüber deren Oberfläche 9 unbeweglich angeordnet. Die Anpressmittel 7 sind so ausgebildet und angeordnet, dass durch sie das Dekormaterial 1 - zumindest in der Nähe des Randes 2 - zumindest während dem Hinterpressen und/oder Hinterspritzen auf die Haltemittel 8 gepresst wird.

Vor dem Hinterspritzen (Fig. 1A und 1B) wird das Dekormaterial 1 in die Kavität 4,4' und auf die Haltemittel 8 gelegt. Darauf wird die Form ganz geschlossen, was bewirkt, dass das Dekormaterial 1 zumindest in der Nähe seines Randes, aber vorzugsweise nicht direkt am Rand, zwischen den Anpressmitteln 7 und den Haltemitteln 8 eingeklemmt wird. Das Dekormaterial ist nun so sicher gehalten, dass es während dem Einspritzen der fliessfähigen Kunststoffmasse nicht verrutschen kann. Das Kunststoffmaterial drückt während dem Einspritzen bzw. Hinterspritzen das Dekormaterial nach oben an die Anpressmittel 7 und die Oberfläche 10, so dass die Kunststoffmasse nicht auf die Oberseite des Dekormaterials 1 fliessen kann. Vorrichtungen zum Hinterspritzen können - abweichend von der Darstellung in Fig. 1 - eine beliebige Lage im Raum einnehmen, so dass die Bezeichnungen unten bzw. oben nur beschreibend und nicht einschränkend zu verstehen sind.
Vor dem Hinterpressen (Fig. 1C und 1B) wird das Dekormaterial 1 in die Kavität 4,4' und auf zusätzliche, bewegliche Haltemittel 8' gelegt, welche das Dekormaterial so weit über der Oberfläche 9 halten, dass Kunststoffmasse in die Form eingebracht werden kann, ohne dass diese das Dekormaterial berührt. Diese beweglichen Haltemittel 8' sind vorzugsweise vom Rand des Dekormaterials weiter beabstandet als die fixen Haltemittel 8. Nach dem Einbringen der Kunststoffmasse wird die Form - welche an sich bekannte Tauchkanten aufweist (nicht dargestellt), welche ermöglichen, die Form zu schliessen bevor die Kunststoffmasse durch das vollständige Zusammenbewegen der Formteile 5,6 verdränggepresst wird - ganz geschlossen. Dies bewirkt, dass das Dekormaterial 1 zumindest in der Nähe seines Randes (aber vorzugsweise nicht direkt am Rand) zwischen den Anpressmitteln 7 und den fixen Haltemitteln 8 eingeklemmt und die Kunststoffmasse durch den Schliessdruck verteilt wird. Das Dekormaterial ist nun so sicher gehalten, dass es während dem Hinterpressen der fliessfähigen Kunststoffmasse nicht verrutschen kann. Selbstverständlich kann die Vorrichtung gemäss Fig. 1C auch zum Hinterspritzen verwendet werden. Vorrichtungen zum Hinterpressen können - abweichend von der Darstellung in Fig. 1 - eine solche Lage im Raum einnehmen, dass die Formhälften horizontal aufeinander zu bewegt werden.

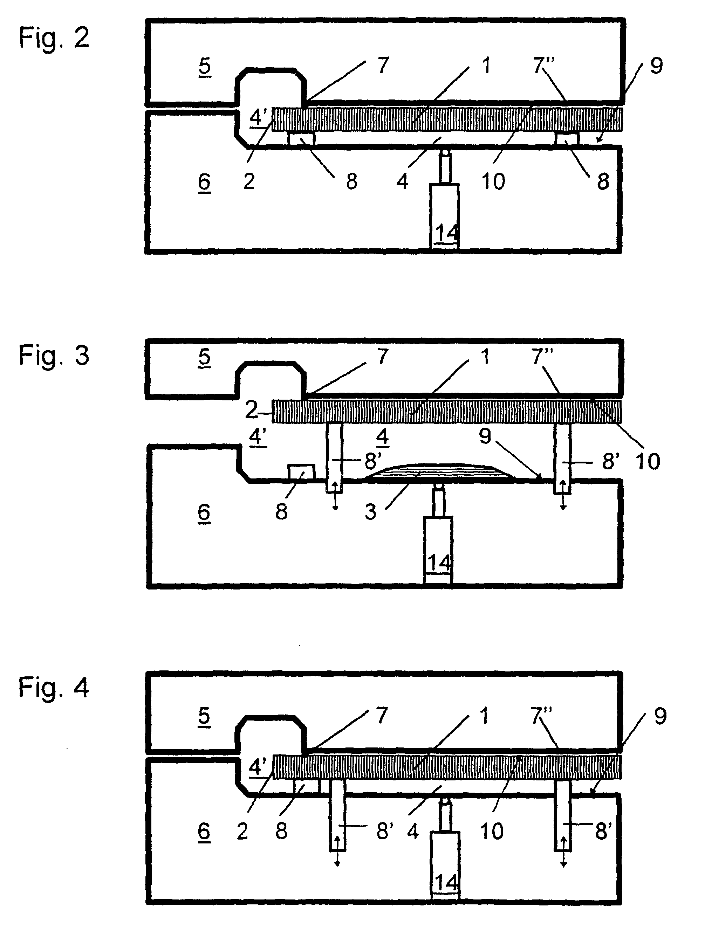

Eine erste Ausführungsform der erfindungsgemässen Vorrichtung ist in Fig. 2 dargestellt und umfasst Haltemittel 8, welche mit dem zweiten Formteil 6 fix verbunden sind. Diese Haltemittel 8 sind somit geeignet, ein eingelegtes Dekormaterial 1 in der geschlossenen Form sicher zu halten, damit beim Hinterspritzen der Rand 2 vollständig eingefasst werden kann. Die Haltemittel 8 sind so angeordnet, dass das Dekormaterial zumindest in der Nähe seines Randes 2 gegen das Anpressmittel 7 gedrückt wird. Vorzugsweise ist das Anpressmittel 7 als 7 als fixe Klinge ausgebildet, welche einen recht hohen Anpressdruck und damit ein Zusammenquetschen des Dekormaterials 1 bewirkt (vgl. Fig. 1B). Falls es, z.B. wegen der Grösse oder Form des Dekormaterials, erforderlich ist, können weitere fixe Haltemittel 8 vorgesehen sein, welche das Dekormaterial auch in randfernen Zonen gegen die ebenfalls als Anpressmittel 7'' wirkende Formoberfläche 10 halten. Mit 14 ist eine Nadelverschlussdüse bezeichnet, über welche die Kunststoffmasse in die Kavität 4,4' eingespritzt werden kann.

Die erfindungsgemässe Vorrichtung, gemäss einer zweiten Ausführungsform, ist in Fig. 3 dargestellt. Diese Form umfasst ein erstes Formteil 5 und ein zweites Formteil 6. Diese beiden Formteile definieren zusammen eine Kavität 4,4'. Die Form ist teilweise geöffnet, so dass Trägermaterial 3 als fliessfähige Kunststoffmasse - zum Vorbereiten des Hinterpressvorganges - auf die Oberfläche 9 des zweiten Formteils 6 in die Kavität 4 gebracht werden kann. Vorzugsweise geschieht dies, ohne dass das Trägermaterial mit dem Dekormaterial 1 in Berührung kommen kann. Zusätzliche Haltemittel 8' sind zu diesem Zweck über eine so grosse Distanz beweglich (mit Doppelpfeil markiert) ausgeführt, dass bei teilweise geöffneter Form ein genügend grosser Abstand zwischen dem gegen die Oberfläche 10 des ersten Formteils 5 gepressten Dekormaterials 1 und dem auf die Oberfläche 9 des zweiten Formteils 6 gebrachten Trägermaterial 3 eingehalten werden kann. Die fixen Haltemittel 8 sind so angeordnet, dass das Dekormaterial zumindest in der Nähe seines Randes 2 gegen das Anpressmittel 7 gedrückt wird. Falls es, z.B. wegen der Grösse oder Form des Dekormaterials, erforderlich ist, können weitere bewegliche Haltemittel 8' vorgesehen sein, welche das Dekormaterial auch in randfernen Zonen gegen die ebenfalls als Anpressmittel 7'' wirkende Formoberfläche 10 halten.

In dieser Situation ist das Dekormaterial 1 fertig in die Vorrichtung eingelegt. Das Trägermaterial 3 kann nun z.B. mittels einer schwenkbaren Breitschlitzdüse (Strangablegeverfahren, nicht gezeigt) oder mittels zumindest einer Nadeiverschlussdüse 14 (Quellflussverfahren, siehe Fig. 3) auf die Oberfläche 9 der Kavität 4 gebracht werden. Darauf wird die Form geschlossen und damit das Trägermaterial durch den Anpressdruck gleichmässig in den Zonen 4 und 4' der Kavität verteilt und mit der Rückseite des Dekormaterials 1 flächig verpresst. Das Dekormaterial 1, insbesondere dessen Rand 2, wird während des Schliessens der Form mittels der beweglichen Haltemittel 8' gegen die Oberfläche 10 des ersten Formteils 5 und mittels den fixen Haltemitteln 8 im Bereich des Randes 2 gehalten. So wird erreicht, dass es seine Position innerhalb der Kavität so beibehält, dass der Teil des einzufassenden Randes 2 immer in die Zone 4' der Kavität ragt und damit vollständig vom Trägermaterial 3 umflossen wird. Es reicht grundsätzlich aus, die mit Anpressmittel 7 bezeichnete Stelle des ersten Formteils 5 als einfache Kante auszubilden. Damit das Dekormaterial noch sicherer gehalten wird, kann diese Stelle 7 als Klinge, Rechen oder ähnliche, die Kontaktfläche mit dem Dekormaterial 1 verringernde und über die Oberfläche 10 des ersten Formteils 5 erhabene Struktur ausgebildet sein.

Fig. 4 zeigt eine zweite Ausführungsform der erfindungsgemässen Vorrichtung in der geschlossenen Position. Durch die zumindest eine Nadelverschlussdüse 14 wird demnächst Trägermaterial in Form einer fliessfähigen Kunststoffmasse eingespritzt. Dabei halten die fixen Haltemittel 8 das Dekormaterial 1 - vorzugsweise gleichmässig, zumindest jedoch in seinem randnahen Bereich - gegen die Oberfläche 10 des ersten Formteils 5, so dass es während dem Hinterspritzen sicher in der gewünschten Position gehalten wird. Die Haltekraft, mit welcher die zusätzlichen, beweglichen Haltemittel 8' das Dekormaterial an die Oberfläche 10 des ersten Formteils 5 pressen, ist vorzugsweise einstellbar.

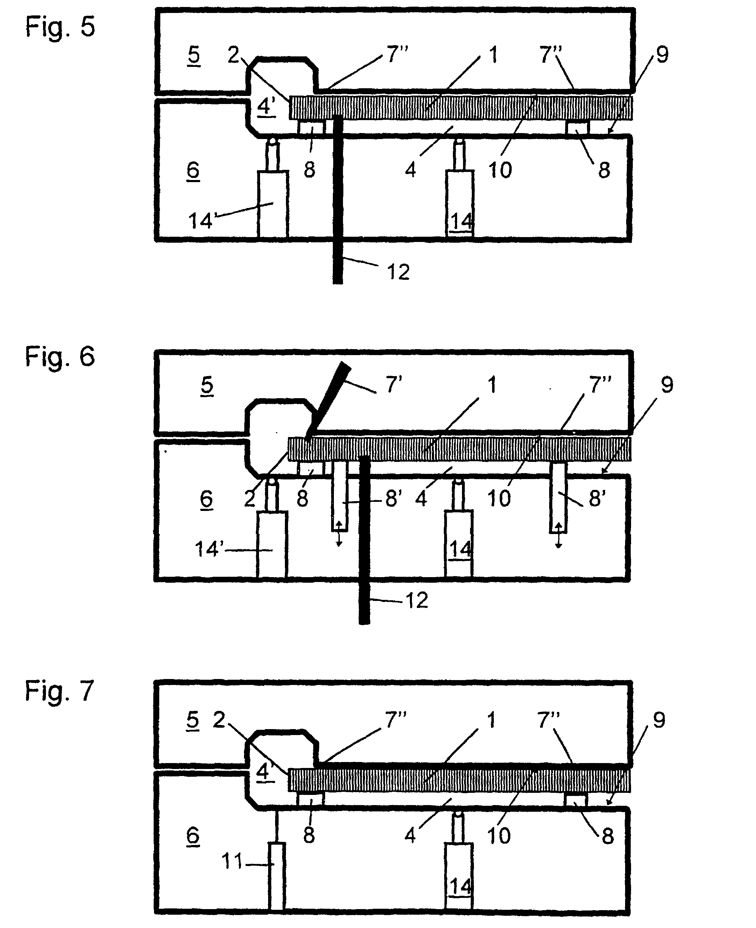

Die beweglichen Haltemittel 8' können auch so ausgebildet sein, dass sie während dem Hinterspritzen bzw. während dem Verdrängpressen zurückgezogen werden können.
Eine dritte Ausführungsform der erfindungsgemässen Vorrichtung ist in Fig. 5 dargestellt und umfasst Haltemittel 8, welche mit dem zweiten Formteil 6 fix verbunden sind. Diese Haltemittel 8 sind somit geeignet, ein eingelegtes Dekormaterial 1 in der geschlossenen Form sicher zu halten, damit beim Hinterspritzen der Rand 2 vollständig eingefasst werden kann. Diese dritte Ausführungsform unterscheiden sich von den vorhergehenden Ausführungsformen im Wesentlichen durch zumindest einen Schieber 12, mit dem die Zone 4' der Kavität, welche für die Einfassung des Randes 2 des Dekormaterials 1 dient, gegenüber der Zone 4 der Kavität, in der das Dekormaterial flächig hinterpresst und/oder hinterspritzt wird, abgesperrt werden kann. Der Einsatz dieses Schiebers ermöglicht eine saubere Übergangszone zwischen zwei unterschiedlichen Trägermaterialien 3',3'', die nacheinander in die Kavität gebracht werden. Der Schieber kann parallel zum Rand des Dekormaterials gerade oder gekrümmt ausgebildet sein, er kann aber auch eine derart geschwungene oder gezackte Form aufweisen, dass eine Verzahnung zwischen den beiden Trägermaterialien 3',3'' erzeugt wird. Auch ermöglicht diese dritte Ausführungsform, dass die Zone 4 der Kavität beliebig mittels Hinterpressen oder Hinterspritzen des Dekormaterials und die Zone 4' zum Einfassen des Randes durch Spritzgiessen mit dem gleichen oder einem anderen Trägermaterial gefüllt wird. Als andere Trägermaterialien 3'' werden hier Kunststoffe bezeichnet, die eine andere Zusammensetzung und/oder eine andere Festigkeit als das flächig hinterpresste/hinterspritzte Trägermaterial 3' aufweisen.

Eine vierte Ausführungsform der erfindungsgemässen Vorrichtung ist in Fig. 6 dargestellt. Diese vereinigt im Wesentlichen die Ausführungsformen 2 und 3. Die fixen Haltemittel 8 sind so angeordnet, dass das Dekormaterial 1 zumindest in der Nähe seines Randes 2 gegen das hier als Schieber ausgebildete Anpressmittel 7' gedrückt wird. Mit Hilfe dieses Schiebers kann ein sogenannter Hinterstich 18 (siehe auch Fig. 8C) im Bereich des Übergangs der Randeinfassung aus Trägermaterial 3 zum Dekormaterial 1 hergestellt werden. Auf diese Weise gelingt es, Abdrücke im Dekormaterial 1, die auf die Einwirkung eines Anpressmittels 7, 7' in der Nähe des Randes 2 des Dekormaterials zurückzuführen sind, zu kaschieren. Falls die Oberfläche 10 des ersten Formteils 5 als Anpressmittel 7'' verwendet wird, ist dieses Problem der Abdrücke im Dekormaterial geringere Um aber noch weniger Abdrücke auf der Vorderseite des Dekormaterials zu erzeugen, werden vorzugsweise Nadeln als bewegliche Haltemittel 8' eingesetzt. Damit das Dekormaterial aber wirkungsvoll gehalten werden kann, sollen diese Nadeln zumindest zwei Spitzen aufweisen, die untereinander so verbunden sind, dass das Dekormaterial nicht einfach von der ganzen Nadel durchstochen wird.

Figur 7 zeigt eine fünfte Ausführungsform der erfindungsgemässen Vorrichtung. Diese unterscheidet sich von den vorhergehenden Ausführungsformen im Wesentlichen durch zumindest einen Gaseinlass 11, mit dem die Zone 4' der Kavität, welche für die Einfassung zumindest eines Teils des Randes 2 des Dekormaterials 1 dient, unter Verwendung des sogenannten Gas-Innendruck-Verfahrens (GID-Verfahren) gefüllt werden kann. Falls die Vorrichtung mit über eine grössere Distanz beweglichen Halteeinrichtungen 8' (vgl. Figuren 1C, 3, 4 und 6) bestückt ist, eignet sie sich für das Hinterpressen und/oder Hinterspritzen des Dekormaterials. Falls die Vorrichtung mit fixen Halteeinrichtungen 8 bestückt ist, eignet sie sich zum Hinterspritzen des Dekormaterials 1. Immer - sei nun die Zone 4' durch einen Schieber 12 von der Zone 4 der Kavität getrennt oder nicht - wird in einer ersten Phase des GID-Verfahrens die Zone 4' der Kavität vollständig mit Kunststoffschmelze gefüllt. In einer zweiten Phase wird - nach dem zumindest teilweisen Verfestigen der mit der Form in Kontakt stehenden Kunststoffschmelze - die noch fliessfähige Seele des Trägermaterials vorzugsweise durch Einleiten bzw. Einpressen eines Gases aus der Kavität 4' in ein Überlaufgefäss (nicht dargestellt) verdrängt. Nachdem das Bauteil - welches ein hinterpresstes und/oder hinterspritztes Dekormaterial 1, dessen Rand 2 zumindest teilweise vollständig eingefasst ist, umfasst - genügend ausgehärtet ist, kann es entformt werden. Darauf wird ein neues Dekormaterial in die Kavität 4 der Vorrichtung gelegt und das nächste Bauteil hergestellt.

Beispielhafte Bauteile, die mit dem erfindungsgemässen Verfahren bzw. unter Verwendung der erfindungsgemässen Vorrichtung hergestellt wurden, sind in Figur 8 dargestellt:
Fig. 8A zeigt ein Bauteil mit einem Dekormaterial 1, das mit einem Trägermaterial 3 flächig verbunden und zumindest teilweise am Rand 2 eingefasst ist und bei welchem das Trägermaterial und die Randeinfassung aus dem gleichen Material bestehen. Charakteristisch für Bauteile, welche mit den hier beschriebenen bzw. dargestellten Vorrichtungen und Verfahren hergestellt werden, sind die randnahen Vertiefungen 15. Diese treten zumindest in den randnahen Gebieten des eingefassten Dekormaterials des Bauteils an der Rückseite des Trägermaterials auf. Ihre Ausdehnung und Anordnung entspricht im Wesentlichen jener der fixen Haltemittel 8. Dieses Bauteil wurde mittels Hinterspritzen hergestellt.
Fig. 8B zeigt ein gattungsgemässes Bauteil, bei welchem die Randeinfassung hohl ausgebildet ist und die Randeinfassung aus einem anders eingebrachten Material 3'' als das Trägermaterial 3' besteht. Zu den randnahen Vertiefungen 15 sind hier auch randferne Vertiefungen 15' erkennbar, dies deshalb, weil die beweglichen Haltemittel 8' während des Verdrängpressens nicht zurückgezogen wurden. Das mit dem Dekormaterial 1 flächig verbundene Trägermaterial 3' wurde mittels Hinterpressen (nach Einbringen der Kunststoffschmelze im Strangablegeverfahren) verarbeitet. Das den Rand 2 des Dekormaterials 1 einfassende Trägermaterial 3' wurde mittels Hinterspritzen im GID-Verfahren eingebracht, so dass ein Hohlraum 16 in der Randeinfassung produziert wurde. Die Übergangszone, welche verzahnt ausgebildet ist, befindet sich zwischen den gezeigten Vertiefungen 15 und 15'. Der Schieber 12 der Vorrichtung wurde während dem Hinterpressen gegen das Dekormaterial gedrückt und entsprechend dem Schliessen der Kavität zwischen de Formteilen kontinuierlich zurückgezogen, er blieb jedoch immer mit dem Dekormaterial in gutem Kontakt. Erst nachdem das Kunststoffmaterial genügend verfestigt war, wurde der Schieber ganz zurückgezogen, die Randeinfassung gespritzt und der Hohlraum 16 erzeugt.
Fig. 8C zeigt ein gattungsgemässes Bauteil, bei welchem die Randeinfassung als Dichtlippe 17 ausgebildet ist, einen Hinterstich 18 aufweist und aus einem anderen, weicheren Material 3'' als das Trägermaterial 3' besteht. Nach dem Einlegen des Dekormaterials 1 auf die fixierten Haltemittel wurde die Form geschlossen und zuerst - bei geschlossenem Schieber 12 - das vollflächig mit dem Dekormaterial 1 zu verbindende härtere Trägermaterial 3' in die Zone 4 der Kavität eingespritzt. Die wellenförmig ausgebildeten Schieber, die zwischen den randnahen Haltemitteln 15 und den randfernen Haltemitteln 15' angeordnet waren, wurden dann zurückgezogen und darauf das weichere Trägermaterial 3'' in die noch leere Zone 4' der Kavität eingespritzt. Durch die Wellenform der verwendeten Schieber wurde die Kontaktfläche zwischen den beiden Trägermaterialien 3', 3'' erheblich vergrössert, so dass dem Bauteil eine flexible Dichtlippe einstückig angeformt werden konnte, welche trotz der hohen Beanspruchung sich nicht vom härteren Trägermaterial löst. Ein gleiches Bauteil - ohne die randfernen Vertiefungen 15' - liesse sich auch mittels Hinterpressen herstellen, wenn während der letzten Phase des Verdrängpressens die beweglichen Haltemittel 8' oberflächenbündig zurückgezogen würden.

In den Figuren nicht abgebildet sind an sich bekannte Einrichtungen, wie Extruder, Heiz- und Kühlleitungen, Sammelleitungen, Tauchkanten, Überdruckableitungen usw.; diese Einrichtungen werden vom Fachmann je nach Notwendigkeit vorgesehen bzw. eingesetzt.

Selbstverständlich können - zumindest für das Hinterspritzen - das erste Formteil 5 und das zweite Formteil 6 vertauscht bzw. die Haltemittel 8, 8' und die Anpressmittel 7, 7', 7'' am jeweils gegenüberliegenden Formteil angebracht sein. Die Schliessbewegung der erfindungsgemässen Vorrichtung kann horizontal, vertikal oder beliebig von diesen beiden Richtungen abweichend sein.

Für das Hinterpressen von Dekormaterial 1 kann eine Vorrichtung gemäss der zweiten Ausführungsform (Fig. 2,3) horizontal beweglich ausgebildet sein, so dass die Kavität 4, 4' abweichend von den Figuren 1 bis 7 hauptsächlich in vertikaler Richtung verläuft. Das Dekormaterial 1 wird auch in diesem Fall von den beweglichen Haltemitteln 8' gegen die Oberfläche des gegenüberliegenden Formteils gehalten, so dass mittels des Quellflussverfahrens in die Kavität 4 eingebrachtes Trägermaterial 3 nicht mit dem Dekormaterial 1 in Kontakt kommen kann, solange die Form noch teilweise geöffnet ist.

Um die Vertiefungen 15 im Trägermaterial 3 auf der Rückseite des Bauteils zumindest teilweise zu verhindern, können z.B. beim Hinterpressen in der letzten Phase des Schliessens der Form - wenn das Verdrängpressen bereits im Wesentlichen die Kavität 4,4' gefüllt hat - die beweglichen Haltemittel 8' ganz oder teilweise zurückgezogen werden. Um noch weniger Abdrücke auf der Vorderseite des Dekormaterials 1 zu erzeugen, werden vorzugsweise Nadeln als bewegliche Haltemittel 8' eingesetzt. Damit das Dekormaterial aber wirkungsvoll gehalten werden kann, sollen diese Nadeln zumindest zwei Spitzen aufweisen, die untereinander so verbunden sind, dass das Dekormaterial nicht einfach von der ganzen Nadel durchstochen wird. Speziell bevorzugt sind auch kammartige Kombinationen von Nadeln, deren einzelne Spitzen (siehe Fig. 9A) nicht länger sind, als das die Dicke d des zu haltenden Dekormaterials beträgt. Solche Kämme bieten zudem den Vorteil, dass diese, sollen sie als bewegliche Haltemittel 8' ausgebildet sein, mit einfachen Mitteln, die ausserhalb der Kavität 4 mit den Kämmen zusammenwirken, bewegt werden können. Die Zwischenräume z zwischen den Nadeln sind, dem verwendeten Dekormaterial entsprechend, mehr oder weniger weit auseinanderliegend angeordnet, so dass das Trägermaterial durch diese Zwischenräume z durchtreten und die Zone 4' der Kavität zwischen den Formteilen 5, 6 vollständig füllen kann. Wie in Fig. 9B gezeigt, können auch stumpfe Nadeln eingesetzt werden, die z.B. gerade um die Dicke d des Dekormaterials kürzer sind als die spitzen Nadeln und die auch durch Zwischenräume z voneinander beabstandet sind. Die von den fixen, randnahen Haltemitteln 8 auf der Rückseite des Bauteils im Trägermaterial 3 erzeugten Vertiefungen 15 stören das Bild eines solchen Bauteils nicht, da sie im Allgemeinen - wie im Beispiel von als Kartentaschen an den Innenseiten von Autotüren ausgebildeten Bauteilen - gegenüber dem Benutzer unsichtbar angeordnet sind. Weisen Nadeln Spitzen auf, so halten sie das Dekormaterial extrem gut am Ort, es kann deshalb vorteilhaft sein, die Nadeln entsprechend elastisch auszubilden, damit geringe Bewegungen und Deformationen des Dekormaterials ausgeglichen werden können.

Als Materialien kommen alle für ein Hinterpress- und/oder Hinterspritzverfahren geeigneten Kunststoffe, also Thermoplaste bzw. dauerelastische Polymere wie z.B. Polypropylen, ABS-Copolymer (Acrylnitril-Butadien-Styrol-Copolymer) oder thermoplastische Kautschuke etc. in Frage. Diese Kunststoffe können auch beispielsweise mit Fasern oder Matten verstärkt sein. Insbesondere die vollflächig dem Dekormaterial hinterpressten Trägermaterialien können zur Erhöhung der Festigkeit bzw. Härte solche Verstärkungen oder beigegeben Füllstoffe umfassen. Dabei werden oft auch verschiedenfarbige Dekormaterialien und/oder Kunststoffe mit unterschiedlicher Textur verwendet. In Abweichung von den beschriebenen Verfahren und Materialien können auch andere fliessfähige oder pastöse Massen bei der erfindungsgemässen Herstellung von Bauteilen verwendet werden.

Als Anwendungsbeispiele für die Verwendung der erfindungsgemässen Vorrichtungen und Verfahren sollen - stellvertretend und keinesfalls abschliessend - genannt werden:
- Ausstattungs- bzw. Verkleidungselemente in Verkehrsmitteln (z.B. in Autos, Bussen, Trams, Eisenbahnen, Schiffen oder Flugzeugen) umfassen insbesondere Kartentaschen, Säulenverkleidungen (mit oder ohne Anschlüsse zum Fensterglas), Bodenteppiche, Abdeckungen von Boden und Wänden des Kofferraumbodens und Kofferraumdeckel.
- Sitzmöbel für Massenverkehrsmittel, insbesondere Sitzschalen und -Lehnen.
- Verkleidungselemente im Hochbau, insbesondere mit Teppich belegte Sockelleisten für Wohn- und Geschäftsräume, sowie mit Randabschlüssen versehene Teppichbeläge auf Treppen und Türvorlagen.

## Patentansprüche

1. Vorrichtung zum Hinterpressen und/oder Hinterspritzen eines Dekormaterials (1) und zum Einfassen zumindest eines Teils des Randes (2) dieses Dekormaterials mit einem Trägermaterial (3), welche mindestens zwei - eine Kavität (4,4') ausbildende - Formteile (5/6) umfasst; wobei ein erstes Formteil (5) Anpressmittel (7,7',7'') und ein zweites Formteil (6) Haltemittel (8), zum Halten eines in die Kavität (4,4') gelegten Dekormaterials (1) in einem Abstand zu einer durch das zweite Formteil (6) gebildeten Oberfläche (9) der Kavität, umfasst und diese Haltemittel (8) gegenüber dieser Oberfläche (9) erhaben sind, **dadurch gekennzeichnet, dass** die Haltemittel (8) und die Anpressmittel (7,7',7'') ganz innerhalb der Kavität (4,4') und jeweils gegenüber deren Oberfläche (9 bzw. 10) unbeweglich angeordnet sind und dass die Anpressmittel (7,7',7'') so ausgebildet und in Schliessrichtung der Vorrichtung jeweils direkt gegenüber den Haltemitteln (8) angeordnet sind, dass das Dekormaterial (1) - zumindest in der Nähe des Randes (2) - zumindest während dem Hinterpressen und/oder Hinterspritzen zwischen den Haltemitteln (8) und den Anpressmitteln (7,7',7'') gepresst wird.

2. Vorrichtung nach Anspruch 1, **dadurch gekennzeichnet, dass** die Anpressmittel(7,7',7'') und Haltemittel (8) vom Rand der Kavität (4,4') beabstandet angeordnet sind.

3. Vorrichtung nach einem der vorhergehenden Ansprüche, **dadurch gekennzeichnet, dass** zusätzliche Haltemittel (8') - zum Halten des Dekormaterials auch bei teilweise geöffneter Vorrichtung - beweglich angeordnet sind.

4. Vorrichtung nach Anspruch 3, **dadurch gekennzeichnet, dass** die beweglichen Haltemittel (8') als Nadeln mit mindestens zwei Spitzen bzw. als Nocken, Rippen oder Säulen ausgebildet sind.

5. Vorrichtung nach einem der Ansprüche 3 oder 4, **dadurch gekennzeichnet, dass** die beweglichen Haltemittel (8') in Gruppen miteinander verbunden sind.

6. Vorrichtung nach einem oder mehreren der vorhergehenden Ansprüche, **dadurch gekennzeichnet, dass** Anpressmittel (7') beweglich angeordnet sind.

7. Vorrichtung nach einem der vorhergehenden Ansprüche, **dadurch gekennzeichnet, dass** Anpressmittel (7, 7') als Klinge ausgebildet sind.

8. Vorrichtung nach einem der Ansprüche 1 bis 5, **dadurch gekennzeichnet, dass** Anpressmittel (7'') mit der Oberfläche (10) der Kavität (4) des ersten Formteils (5) eine gemeinsame Ebene bilden bzw. durch diese gebildet sind.

9. Vorrichtung nach einem der vorhergehenden Ansprüche, **dadurch gekennzeichnet, dass** sie zumindest einen Gaseinlass (11) umfasst, der in die Kavität (4,4') mündet.

10. Vorrichtung nach einem der vorhergehenden Ansprüche, **dadurch gekennzeichnet, dass** die Kavität (4,4') mittels eines Schiebers (12) in eine erste Zone (4) zum flächigen Hinterspritzen und/oder Hinterpressen des Dekormaterials (1) und eine zweite Zone (4') zur Ausbildung der Einfassung (13) des Randes (2) des Dekormaterials unterteilbar ist.

11. Vorrichtung nach Anspruch 10, **dadurch gekennzeichnet, dass** in jede Zone (4,4') der Kavität zumindest eine Einspritzdüse (14) zum Einspritzen von Trägermaterial (3) mündet.

12. Verwendung der Vorrichtung nach einem oder mehreren der Ansprüche 1 bis 11 zum Hinterpressen und/oder Hinterspritzen eines Dekormaterials (1) und zum Einfassen zumindest eines Teils des Randes (2) dieses Dekormaterials mit einem Trägermaterial (3), **dadurch gekennzeichnet, dass** auf der Rückseite des mit dem Dekormaterial (1) flächig verbundenen Trägermaterials (3) Vertiefungen (15) zumindest in der Nähe der Randeinfassung (13) entstehen.

13. Verfahren zum Hinterpressen eines Dekormaterials (1) und zum Einfassen zumindest eines Teils des Randes (2) dieses Dekormaterials mit einem Trägermaterial (3), mit einer Vorrichtung, welche mindestens zwei - eine Kavität (4,4') ausbildende - Formteile (5,6) umfasst; wobei ein erstes Formteil (5) Anpressmittel (7,7',7") und ein zweites Formteil (6) Haltemittel (8), zum Halten eines in die Kavität (4,4') gelegten Dekormaterials (1) in einem Abstand zu einer durch das zweite Formteil (6) gebildeten Oberfläche (9) der Kavität, umfasst und diese Haltemittel (8) gegenüber dieser Oberfläche (9) erhaben sind, **dadurch gekennzeichnet, dass** diese Haltemittel (8) und Anpressmittel (7,7',7'') ganz innerhalb der Kavität (4,4'), jeweils gegenüber deren Oberfläche (9 bzw. 10) unbeweglich und in Schliessrichtung der Vorrichtung einander direkt gegenüber angeordnet sind, wobei ein Dekormaterial (1) in die Kavität (4,4') gelegt wird, das Dekormaterial durch bewegliche Haltemittel (8'), welche gegenüber einer durch das zweite Formteil (6) gebildeten Oberfläche (9) der Kavität erhaben sind, von dieser Oberfläche (9) beabstandet gehalten und das Dekormaterial (1) mittels den Anpressmitteln - zumindest in der Nähe des Randes (2) - zumindest während dem Hinterpressen auf die Haltemittel (8) gepresst wird.

14. Verfahren nach Anspruch 13, **dadurch gekennzeichnet, dass** die beweglichen Haltemittel (8') in der letzten Phase des Hinterpressens zurückgezogen werden, so dass keine randfernen Vertiefungen 15' entstehen.

15. Verfahren zum Hinterspritzen eines Dekonnaterials (1) und zum Einfassen zumindest eines Teils des Randes (2) dieses Dekormaterials mit einem Trägermaterial (3), mit einer Vorrichtung, welche mindestens zwei - eine Kavität (4,4') ausbildende - Formteile (5,6) umfasst; wobei ein erstes Formteil (5) Anpressmittel (7,7',7'') und ein zweites Formteil (6) Haltemittel (8), zum Halten eines in die Kavität (4,4') gelegten Dekormaterials (1) in einem Abstand zu einer durch das zweite Formteil (6) gebildeten Oberfläche (9) der Kavität, umfasst und diese Haltemittel (8) gegenüber dieser Oberfläche (9) erhaben sind, **dadurch gekennzeichnet, dass** diese Haltemittel (8) und Anpressmittel (7,7',7'') ganz innerhalb der Kavität (4,4'), jeweils gegenüber deren Oberfläche (9) unbeweglich und in Schliessrichtung der Vorrichtung einander direkt gegenüber angeordnet sind, wobei ein Dekormaterial (1) in die Kavität (4,4') gelegt und die Kavität geschlossen wird, so dass das Dekormaterial (1) mittels den Anpressmitteln (7,7',7'') - zumindest in der Nähe des Randes (2) - zumindest während dem Hinterspritzen auf die Haltemittel (8) gepresst wird.

16. Verfahren nach einem der Ansprüche 13 bis 15, **dadurch gekennzeichnet, dass** zumindest ein Teil des Trägermaterials (3) - nach dem Füllen der Kavität (4,4'), mit einem Gas, welches über einen Gaseinlass (11) in die Kavität (4,4') eingepresst wird - verdrängt wird, so dass ein Hohlraum (16) im Trägermaterial (3) entsteht.

17. Bauteil mit einem Dekormaterial (1), welches mittels des Verfahrens nach einem oder mehreren der Ansprüche 13 bis 16 durch Hinterpressen und/oder Hinterspritzen mit einem Trägermaterial (3) flächig verbunden und zumindest teilweise am Rand (2) eingefasst ist.

18. Bauteil nach Anspruch 17, **dadurch gekennzeichnet, dass** das Trägermaterial (3) einen harten Teil (3') und einen weichen Teil (3'') umfasst.

19. Bauteil nach Anspruch 18, **dadurch gekennzeichnet, dass** der weiche Teil (3'') des Trägermaterials (3) eine Dichtlippe (17) umfasst.

20. Bauteil nach einem der Ansprüche 17 bis 19, **dadurch gekennzeichnet, dass** das Trägermaterial (3), welches dem Dekormaterial (1) flächig hinterpresst und/oder hinterspritzt ist und welches zumindest einen Teil des Randes (2) einfasst, dem Dekormaterial (1) einstückig angeformt ist.

## Claims

1. A device for in-mould compression and/or in-mould injection of a decorative material (1) and for edging at least a part of the border (2) of this decorative material with a supporting material (3), said device comprising at least two mould parts (5, 6) which form a cavity (4, 4'); wherein a first mould part (5) comprises press-on means (7, 7', 7'') and a second mould part (6) comprises retention means (8) for retention of a decorative material (1) placed into the cavity (4, 4'), at a distance from a surface (9) of the cavity, which surface (9) is formed by the second mould part (6), and wherein these retention means (8) are raised in relation to said surface (9), **characterised in that** the retention means (8) and the press-on means (7, 7', 7'') are arranged entirely within the cavity (4, 4') and are arranged so as to be immovable in relation to the surface (9 or 10) of said cavity (4, 4'); and **in that** the press-on means (7, 7', 7'') are designed and arranged such that in the closing direction of the device they are arranged directly opposite the retention means (8) so that the decorative material (1), at least near the border (2), is pressed between the retention means (8) and the press-on means (7, 7', 7'') at least during in-mould compression and/or in-mould injection.

2. The device according to claim 1, **characterised in that** the press-on means (7, 7', 7'') and retention means (8) are arranged so as to be spaced apart from the border of the cavity (4, 4').

3. The device according to one of the preceding claims, **characterised in that** additional retention means (8') - for retention of the decorative material even when the device is partially open - are arranged so as to be movable.

4. The device according to claim 3, **characterised in that** the movable retention means (8') are needles comprising at least two points, or are cams, ribs or columns.

5. The device according to one of claims 3 or 4, **characterised in that** the movable retention means (8') are interconnected in groups.

6. The device according to one or several of the preceding claims, **characterised in that** press-on means (7') are arranged so as to be movable.

7. The device according to one of the preceding claims, **characterised in that** press-on means (7, 7') are designed as a blade.

8. The device according to one of claims 1 to 5, **characterised in that** press-on means (7'') form a common plane with the surface (10) of the cavity (4) of the first mould part (5), or are formed by it.

9. The device according to one of the preceding claims, **characterised in that** it comprises at least one gas inlet (11) which leads into the cavity (4, 4').

10. The device according to one of the preceding claims, **characterised in that** the cavity (4, 4') can be divided by a slide gate (12) into a first zone (4) for in-mould injection and/or in-mould compression of the decorative material (1) over its entire area, and a second zone (4') for producing the edging (13) of the border (2) of the decorative material.

11. The device according to claim 10, **characterised in that** at least one injection nozzle (14) for injecting supporting material (3) leads into each zone (4, 4') of the cavity.

12. A use of the device according to one or several of claims 1 to 11 for in-mould compression and/or in-mould injection of a decorative material (1) and for edging at least a part of the border (2) of this decorative material with a supporting material (3), **characterised in that** on the rear of the supporting material (3) which is connected to the decorative material (1) over its entire area, indentations (15) are created, at least near the border edging (13).

13. A method for in-mould compression of a decorative material (1) and for edging at least a part of the border (2) of this decorative material with a supporting material (3), with a device comprising at least two mould parts (5, 6) which form a cavity (4, 4'); wherein a first mould part (5) comprises press-on means (7, 7', 7'') and a second mould part (6) comprises retention means (8) for retention of a decorative material (1) placed into the cavity (4, 4'), at a distance from a surface (9) of the cavity, which surface (9) is formed by the second mould part (6), and wherein these retention means (8) are raised in relation to said surface (9), **characterised in that** said retention means (8) and press-on means (7, 7', 7'') are arranged entirely within the cavity (4, 4'), opposite its surface (9 or 10), and are arranged so as to be immovable in relation to the surface (9 or 10) of said cavity (4, 4'), and said retention means (8) and press-on means (7, 7', 7'') are designed and arranged such that in the closing direction of the device they are directly opposite each other, wherein a decorative material (1) is placed into the cavity (4, 4'), by way of movable retention means (8') which are raised in relation to a surface (9) formed by the second mould part (6) of the cavity, said decorative material is kept at a distance from said surface (9) so that by means of the press-on means, the decorative material (1), at least near the border (2), is pressed onto the retention means (8), at least during in-mould compression.

14. The method according to claim 13, **characterised in that** the movable retention means (8') are withdrawn in the last phase of in-mould compression so that no indentations 15' are created away from the border.

15. The method for in-mould injection of a decorative material (1) and for edging at least a part of the border (2) of this decorative material with a supporting material (3), with a device comprising at least two mould parts (5, 6) which form a cavity (4, 4'); wherein a first mould part (5) comprises-press-on means (7, 7', 7'') and a second mould part (6) comprises retention means (8) for retention of a decorative material (1) placed into the cavity (4, 4'), at a distance from a surface (9) of the cavity, which surface (9) is formed by the second mould part (6), and wherein these retention means (8) are raised in relation to said surface (9), **characterised in that** said retention means (8) and press-on means (7, 7', 7'') are arranged entirely within the cavity (4, 4') and are arranged so as to be immovable in relation to the surface (9) of said cavity (4, 4'), and the press-on means (7, 7', 7'') are designed and arranged such that in the closing direction of the device they are directly opposite each other, wherein a decorative material (1) is placed into the cavity (4, 4') and the cavity is closed so that by means of the press-on means (7, 7', 7'') the decorative material (1), at least near the border (2), is pressed onto the retention means (8), at least during in-mould injection.

16. The method according to one of claims 13 to 15, **characterised in that** at least a part of the supporting material (3) - after filling of the cavity (4, 4') with a gas which is pressed into the cavity (4, 4') by way of a gas inlet (11) - is displaced so that a void (16) results in the supporting material (3).

17. A component with a decorative material (1), which by means of the method according to one or several of claims 13 to 16, is connected over its entire area to a supporting material (3) by in-mould compression and/or in-mould injection, with its border (2) being at least partially edged.

18. The component according to claim 17, **characterised in that** the supporting material (3) comprises a hard part (3') and a soft part (3'').

19. The component according to claim 18, **characterised in that** the soft part (3'') of the supporting material (3) comprises a sealing lip (17).

20. The component according to one of claims 17 to 19, **characterised in that** the supporting material (3), which is in-mould compressed and/or in-mould injected over the entire area of the decorative material (1) and which edges at least part of the border (2), is formed to the decorative material (1) in one piece.

## Revendications

1. Dispositif destiné au sous-moulage par pression et/ou par injection d'un matériau de décoration (1) et à border au moins une partie du bord (2) dudit matériau de décoration avec un matériau de support (3), ledit dispositif comprenant au moins deux parties de moule (5, 6) formant une cavité (4, 4'), une première partie de moule (5) comprenant des moyens de pression par serrage (7, 7', 7'') et une deuxième partie de moule (6) des moyens de maintien (8) destinés à maintenir un matériau de décoration (1) posé dans la cavité (4, 4') à une certaine distance d'une surface (9) de la cavité formée par la deuxième partie de moule (6), lesdits moyens de maintien (8) étant saillants par rapport à ladite surface (9), **caractérisé en ce que** les moyens de maintien (8) et les moyens de pression par serrage (7, 7', 7'') sont disposés entièrement au sein de la cavité (4, 4') et sont chacun immobiles par rapport à la surface (9, voire 10) de ladite cavité et **en ce que** les moyens de pression par serrage (7, 7', 7'') sont réalisés de telle manière et disposés dans la direction de fermeture du dispositif directement en regard des moyens de maintien (8) de telle sorte que le matériau de décoration (1) est pressé - du moins dans la région proche de son bord (2) - entre les moyens de maintien (8) et les moyens de pression par serrage (7, 7', 7'') et ce, du moins pendant le sous-moulage par pression et/ou le sous-moulage par injection.

2. Dispositif selon la revendication 1, **caractérisé en ce que** les moyens de pression par serrage (7, 7', 7'') et les moyens de maintien (8) sont disposés à une certaine distance du bord de la cavité (4, 4').

3. Dispositif selon l'une des revendications précédentes, **caractérisé en ce que** les moyens de maintien (8') supplémentaires - destinés à maintenir le matériau de décoration alors que le dispositif est partiellement ouvert - sont disposés de manière à être mobiles.

4. Dispositif selon la revendication 3, **caractérisé en ce que** les moyens de maintien mobiles (8') sont réalisés sous forme d'aiguilles ayant au moins deux pointes, de saillies, de nervures ou de colonnes.

5. Dispositif selon l'une des revendications 3 ou 4, **caractérisé en ce que** les moyens de maintien mobiles (8') sont reliés par groupes.

6. Dispositif selon une ou plusieurs des revendications précédentes, **caractérisé en ce que** des moyens de pression par serrage (7') sont disposés de manière à être mobiles.

7. Dispositif selon l'une des revendications précédentes, **caractérisé en ce que** les moyens de pression par serrage (7, 7') sont réalisés sous forme de lame.

8. Dispositif selon l'une des revendications 1 à 5, **caractérisé en ce que** des moyens de pression par serrage (7'') forment, avec la surface (10) de la cavité (4) de la première partie de moule (5), une surface plane commune ou qu'ils sont formés par ladite surface plane.

9. Dispositif selon l'une des revendications précédentes, **caractérisé en ce qu'**il comprend au moins une entrée pour le gaz (11) qui débouche dans la cavité (4, 4').

10. Dispositif selon l'une des revendications précédentes, **caractérisé en ce que** la cavité (4, 4') peut être subdivisée en deux zones au moyen d'un verrou (12) ; en une première zone (4) destinée au sous-moulage par injection et/ou par pression, sur toute la surface, du matériau de décoration (1) et en une deuxième zone (4') destinée à former la bordure (13) du bord (2) du matériau de décoration.

11. Dispositif selon la revendication 10, **caractérisé en ce qu'**au moins une buse d'injection (14) destinée à l'injection de matériau de support (3) débouche dans chaque zone (4, 4') de la cavité.

12. Utilisation du dispositif selon une ou plusieurs des revendications 1 à 11 destiné au sous-moulage par pression et/ou par injection d'un matériau de décoration (1) et à border au moins une partie du bord (2) dudit matériau de décoration avec un matériau de support (3), **caractérisé en ce que** des renfoncements (15) se forment, du moins à proximité de la bordure (13), au dos du matériau de support (3) relié par sa surface au matériau de décoration (1).

13. Procédé destiné au sous-moulage par pression d'un matériau de décoration (1) et à border au moins une partie du bord (2) de ce matériau de décoration avec un matériau de support (3), avec un dispositif comprenant au moins deux parties de moule (5, 6) formant une cavité (4, 4'), une première partie de moule (5) comprenant des moyens de pression par serrage (7, 7', 7'') et une deuxième partie de moule (6) des moyens de maintien (8) destinés à maintenir un matériau de décoration (1) posé dans la cavité (4, 4') à une certaine distance d'une surface (9) de la cavité formée par la deuxième partie de moule (6), lesdits moyens de maintien (8) étant saillants par rapport à ladite surface (9), **caractérisé en ce que** lesdits moyens de maintien (8) et les moyens de pression par serrage (7, 7', 7'') sont disposés entièrement au sein de la cavité (4, 4') et sont chacun immobiles par rapport à la surface (9, voire 10) de ladite cavité et disposés face à face dans la direction de fermeture du dispositif, un matériau de décoration (1) étant placé dans la cavité (4, 4'), ledit matériau de décoration étant maintenu à une certaine distance de la surface (9) de la cavité par des moyens de maintien (8') mobiles, saillant de ladite surface (9) formée par la deuxième partie de moule (6), et ledit matériau de décoration (1) étant pressé- du moins dans la région proche du bord (2) - sur les moyens de maintien (8) par les moyens de pression par serrage, du moins pendant le sous-moulage par pression.

14. Procédé selon la revendication 13, **caractérisé en ce que** les moyens de maintien mobiles (8') sont retirés dans la dernière phase du sous-moulage par pression de manière à éviter la formation de renfoncements 15' à une certaine distance du bord.

15. Procédé destiné au sous-moulage par pression d'un matériau de décoration (1) et à border au moins une partie du bord (2) de ce matériau de décoration avec un matériau de support (3), avec un dispositif comprenant au moins deux parties de moule (5, 6) formant une cavité (4, 4'), une première partie de moule (5) comprenant des moyens de pression par serrage (7, 7', 7'') et une deuxième partie de moule (6) des moyens de maintien (8) destinés à maintenir un matériau de décoration (1) posé dans la cavité (4, 4') à une certaine distance d'une surface (9) de la cavité formée par la deuxième partie de moule (6), lesdits moyens de maintien (8) étant saillants par rapport à ladite surface (9), **caractérisé en ce que** lesdits moyens de maintien (8) et les moyens de pression par serrage (7, 7', 7'') sont disposés entièrement au sein de la cavité (4, 4') et sont chacun immobiles par rapport à la surface (9) de ladite cavité et disposés face à face dans la direction de fermeture du dispositif, un matériau de décoration (1) étant placé dans la cavité (4, 4') que l'on ferme alors de sorte que le matériau de décoration (1) est pressé- du moins dans la région proche du bord (2) - sur les moyens de maintien (8) par les moyens de pression par serrage (7, 7', 7'') du moins pendant le sous-moulage par pression.

16. Procédé selon l'une des revendications 13 à 15, **caractérisé en ce que**, après que la cavité (4, 4') ait été remplie d'un gaz introduit sous pression dans la cavité (4, 4') par l'entrée pour le gaz (11), du moins une partie du matériau de support (3) est refoulée de manière à créer un espace vide (16) dans le matériau de support (3).

17. Pièce avec un matériau de décoration (1) relié en surface à un matériau de support (3) et dont au moins une partie du bord (2) est bordée, par sous-moulage par pression et/ou par injection, au moyen du procédé selon une ou plusieurs des revendications 13 à 16.

18. Pièce selon la revendication 17, **caractérisée en ce que** le matériau de support (3) comprend une partie dure (3') et une partie moins dure (3'').

19. Pièce selon la revendication 18, **caractérisée en ce que** la partie moins dure (3'') du matériau de support (3) comprend une lèvre d'étanchéité (17).

20. Pièce selon l'une des revendications 17 à 19, **caractérisée en ce que** le matériau de support (3), qui est appliqué par sa surface sur le matériau de décoration (1) par sous-moulage par pression et/ou par injection, et qui borde au moins une partie du bord (2), est venu de moulage d'une seule pièce avec le matériau de décoration (1).
